# EUROPEAN PATENT SPECIFICATION

(11) **EP 4 516 546 B1**
(45) Date of publication and mention of the grant of the patent: **10.06.2026**
(21) Application number: 23811533.1
(22) Date of filing: 21.04.2023
(51) Int. Cl.: B60K 1/04, B62D 21/02

(54) **SUPPORTING DEVICE FOR DRIVING BATTERY**
STÜTZVORRICHTUNG ZUM ANTREIBEN EINER BATTERIE
DISPOSITIF DE SUPPORT DE BATTERIE D'ENTRAÎNEMENT

(30) Priority: 26.05.2022 JP 2022085908
(43) Date of publication of application: 05.03.2025
(73) Proprietor: Daimler Truck AG, 70771 Leinfelden-Echterdingen (DE)
(72) Inventor: KUMAGAI, Naotatsu, Kawasaki-shi, Kanagawa 211-8522 (JP)
(74) Representative: Hofstetter, Schurack & Partner
(86) International application number: PCT/JP2023/015952
(87) International publication number: WO 2023/228655

(56) References cited:
- WO-A1-2021/153064
- CN-A- 111 799 414
- CN-U- 208 646 580
- CN-U- 208 646 580
- JP-A- 2016 113 063
- JP-A- 2021 084 605
- JP-A- 2021 084 605
- JP-A- 2022 063 125
- JP-A- 2022 063 125

## Description

### [Technical Field]

The present invention is related to a supporting device for a driving battery preferably used for a large-size electric vehicle such as a truck.

### [Background Art]

Conventionally, from the viewpoint of reducing the load on the environment, the development of an electric vehicle such as an electric vehicle, a hybrid vehicle, or a fuel cell vehicle that travels by supplying power of a driving battery to the motor has been progressing in a small vehicle such as a passenger car. Furthermore, in recent years, in the field of heavy-duty vehicles such as trucks, the development of electric vehicles has been performed (e.g., see Patent Document 1).

### [Citation List]

### [Patent Literature]

[Patent Document1] Japanese Laid-open Patent Application No. 2016-113063

### [Summary of Invention]

### [Technical Problem]

Incidentally, for a small vehicle such as a passenger car, since the driving battery is assumed to be mounted inside the vehicle body and therefore the collision load due to the collision of the vehicle is not applied directly to the driving battery, it is possible to set relatively low withstand load strength for the housing of the driving battery.

In contrast to the above, for a heavy-duty vehicle such as a truck, the driving battery may be exposed to the lower side of the ladder frame, and depending on the size of the driving battery, the driving battery may be placed to the outside in the vehicle width direction of the side rails. In this case, a high collision load may be applied to the driving battery when the passenger car collides with the side of the vehicle.

Although the driving battery is not positioned to the outside the vehicle width direction of the ladder frame, if the driving battery is exposed under the ladder frame, it is also conceivable that a high collision load may be applied from the lower side than the side rails to the driving battery in the event of a collision of a passenger car or the like on the side of the vehicle.

In addition, a high collision loads may be applied to the driving battery in relation to other components even in the cases of a front-end or rear-end collision of the vehicle. If a driving battery, typically used for a passenger car, having a housing of which the withstand load strength is set to be relatively low is used in a vehicle such as a truck, it is assumed that the housing of the driving battery cannot withstand the collision load at the time of a collision.

A support device according to the preamble of claim 1 is known from JP 2022 063125.

Considering the above, high withstand load strength is required for a supporting device that supports the driving battery.

On the other hand, the distance that an electric vehicle can travel with respect to the charging capacity of a driving battery is largely related to the vehicle weight. Therefore, weight reduction is required also for the supporting device for a driving battery. In this case, it is conceivable to reduce the weight by lightening holes, this lightening holes must be formed in sufficient consideration of the withstand load strength.

With the above problems in view, one of the objects of the present invention is to provide a supporting device for a driving battery that can reduce the weight thereof with lightening holes while increasing the withstand load strength.

### [Solution to Problem]

The present embodiment developed in order to solve at least part of the above problems, and the following embodiments can be achieved as application examples.
(1) The supporting device of the present application for a driving battery mounted on an electronic vehicle includes: a battery-side bracket including a front bracket that has a squared C-shaped cross section and covers a front edge part of the driving battery, a rear bracket that has a squared C-shaped cross section and covers a rear edge part of the driving battery, a right bracket that has a squared C-shaped cross section and covers a right edge part of the driving battery, and a left bracket that has a squared C-shaped cross section and covers a left edge part of the driving battery, the battery-side bracket being attached to the driving battery; and coupler brackets that are coupled one to each of an intersection part of the front bracket and the right bracket, an intersection part of the front bracket and the left bracket, an intersection part of the rear bracket and the right bracket, an intersection part of the rear bracket and the left bracket, and that couple the driving battery to the electric vehicle via the battery-side bracket, wherein at least one of an upper face part and a lower face part of at least one of the right bracket and the left bracket that are serving as side edge part bracket has a particular region being in a form of a trapezoid having an upper base facing in a direction of the driving battery and being a region at an intermediate region in a longitudinal direction sandwiched by coupling parts coupled with the coupler bracket, one or more lightening holes being formed within the particular region.
   According to the present application example, since a lightening hole is formed in the a trapezoid-shaped particular region on the upper face or the lower face of the right bracket or the left bracket and the particular region does not require large withstand load strength, it is possible to light the right or left bracket, ensuring the withstand load strength required for the right or left bracket, so that the supporting device can be lightened.
(2) In the present application, both ends of a lower base of the trapezoid in the particular region may preferably correspond to boundary part outside in a vehicle width direction of regions at which the brackets overlap in the intersection parts.
   By setting the particular region in this way, it is possible to reduce the weight of the supporting device while further ensuring the required withstand load strength.
(3) In the present application, the electric vehicle may preferably be a truck having a pair of left and right side rails; and the driving battery may preferably be coupled to the pair of side rails via the coupler brackets.
   With this configuration, the impact when the electric vehicle collides (side collision, front collision, or rear collision) is received by the side rails, so that it is possible to suppress damage to the driving battery.
(4) In the present application, the one or more lightening holes may preferably be formed to serve as a plurality of holes for mounting vehicle components, the plurality of holes being usable for installing a vehicle component.
   With this configuration, it is possible to easily mount a vehicle component (small component) and fix wiring to the supporting device.
(5) In the present application, at least one of the side edge part brackets may preferably have a web part having the intermediate region in the longitudinal direction on which part an opening for operation is formed; and a cover may preferably be attached on the opening.
   In this manner, by forming an opening for operation, the driving battery pack can be accessed through the opening, so that the driving battery can be checked and cleaned. Moreover, since the intermediate region in the longitudinal direction of the web part is a region not requiring large withstand load strength, an opening can be formed on the intermediate region, ensuring the withstand load strength.
   Furthermore, by providing a cover to the opening, the driving battery inside can be protected.
(6) In the present application, at least one of the side edge brackets may preferably have a web part having the intermediate region in the longitudinal direction on which part a plurality of lightening hole that function as a plurality of holes for mounting vehicle components are formed, the plurality of holes being usable for installing a vehicle component.

With this configuration, it is possible to easily mount a vehicle component (small component) to the supporting device and fix a wire.

### [Advantageous Effects of Invention]

According to the present embodiment, it is possible to reduce the weight of the supporting device of the driving battery by forming lightening holes while increasing the withstand load strength.

### [Brief Description of Drawings]

[FIG. 1] FIG. 1 is an exploded perspective view showing a bracket to describe the structure of a supporting device for a driving battery of an embodiment;
[FIG. 2] FIG. 2 is a perspective view showing a process of installing the bracket of the supporting device for a driving battery of FIG. 1;
[FIG. 3] FIG. 3 is a perspective view showing a process of installing the bracket of the supporting device for a driving battery of FIG. 1;
[FIG. 4] FIG. 4 is a perspective view showing the driving battery of FIG. 1 in a state of being installed to a vehicle;
[FIG. 5] FIG. 5 is a perspective view showing partially exploded end cross-member (edge bracket) of the supporting device for a driving battery of FIG. 1;
[FIG. 6] FIG. 6 is a front view showing an upper face of a flange-shaped part of an edge bracket of the supporting device for a driving battery of FIG. 1;
[FIG. 7] FIG. 7 is a front view showing an upper face of a modified flange-shaped part of the edge bracket of the supporting device for a driving battery of FIG. 1; and [FIG. 8] FIG. 8 is a front view showing an outer face of a modified web part of the edge bracket of the supporting device for a driving battery of FIG. 1.

### [Description of Embodiments]

An embodiment of the present disclosure will now be described with reference to the accompanying drawings. The following example is merely and there is no intention to exclude various modification and application of techniques not explicitly described in the embodiment. Each structure of the following embodiment can be variously modified without departing from the scope thereof, and can be selected or omitted according to requirement, or combined in an appropriate combination.

### [1.Structure]

### [1-1.Overall Structure]

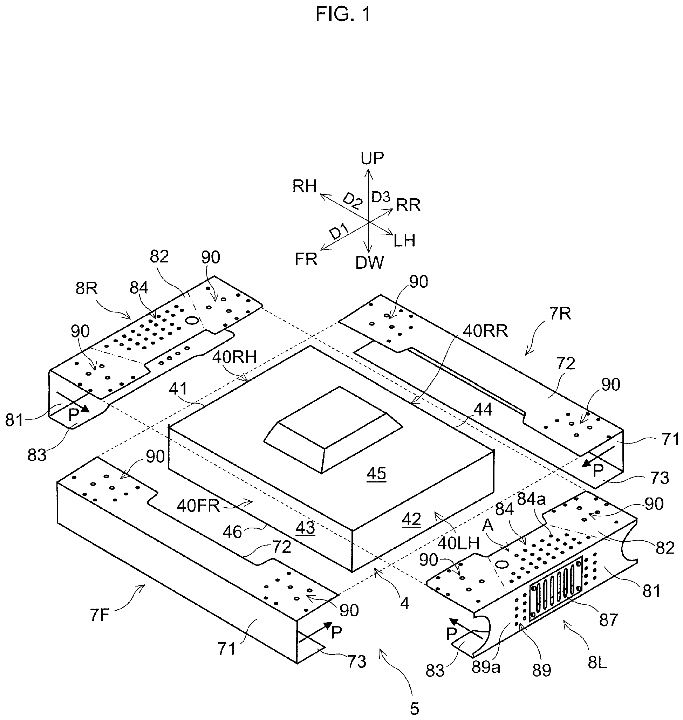

As shown in FIGS. 1-4, a supporting device 1 (simply referred to as the supporting device 1) for a battery pack for a vehicle according to the present embodiment is mounted on an electric truck 3 having ladder frame 2 forming the skeleton of the vehicle body. The electric truck 3 is an electric vehicle that travels by supplying electric power of a driving battery pack (also referred to as "driving battery" and simply "battery pack") 4 to a non-illustrated electric motor. In addition to pure electric vehicles not equipped with an internal combustion engines, electric vehicles also include hybrid vehicles and fuel cell vehicles equipped with driving sources or internal combustion engines for power generation. Further, the electric truck 3 is also referred to as "electric vehicle 3" or "vehicle 3".

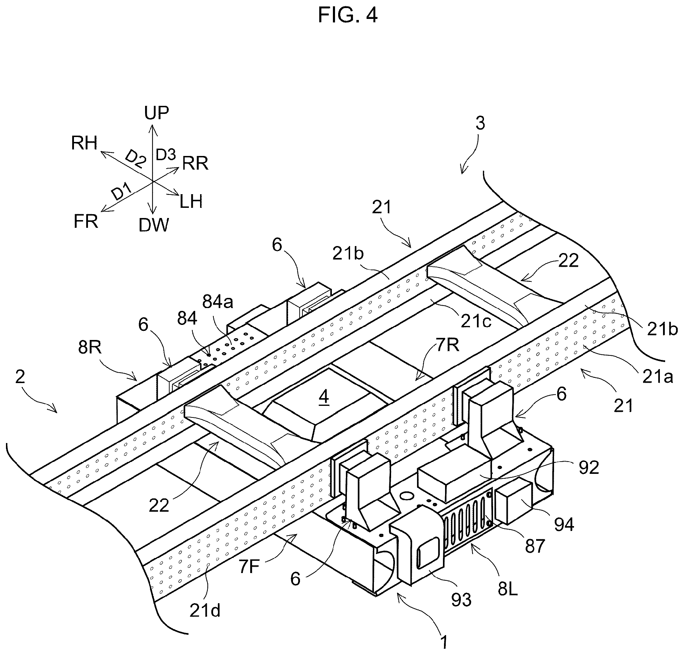

Hereinafter, the front-rear direction of the electric truck 3 is also referred to as vehicle length direction D1, and the left-right direction of the electric track 3 is also referred to as vehicle width direction D2. An up-down direction orthogonal to both the front-rear direction and the left-right direction is also referred to as a vehicle height direction D3. In the drawings: front is denoted by "FR"; rear is denoted by "RR"; left hand is denoted by "LH"; right hand is denoted by "RH"; upside is denoted by "UP"; and downside is denoted by "DW". Incidentally, FIG. 4 shows the lower structure of the electric truck 3 and omits the upper structure (body) disposed on the ladder frame 2.

The ladder frame 2 is a member forming a skeleton of the electric truck 3, and has high rigidity and high strength. The ladder frame 2 includes a pair of side rails 21 extending in the vehicle length direction D1, and multiple cross members 22 extending in the vehicle width direction D2 to connect the side rails 21 to each other.

A pair of side rails 21 are spaced apart from each other in the vehicle width direction D2. Each side rail 21 is formed into a channel shape (U-shaped cross section) including a plate-shaped web part 21a along the vehicle length direction D1 and vehicle height direction D3 and a pair of plate-shaped flange parts 21b, 21c extending toward the inside of the vehicle width direction D2 respectively from the upper and lower edges of the web part 21a.

The multiple cross members 22 are spaced apart from one another other in the vehicle length direction D1. Here, two cross members 22 are illustrated, one at an overlapping position with the battery pack 4 and the other at a position rear to the battery pack 4.

To the battery pack 4, for example, a general-purpose high-voltage battery pack used in a passenger car is applied. In the electric truck 3, the battery pack 4 is mounted under the pair of side rails 21 and protrudes outward in the vehicle width direction D2 from the respective side rails 21. Here, a box-shaped battery pack 4 is illustrated which has a dimension of the vehicle height direction D3 is smaller (thinner) than the respective dimensions of the vehicle length direction D1 and the vehicle width direction D2. However, the shape of battery pack 4 is not particularly limited.

The battery pack 4 has a pair of battery side faces 41, 42, each facing outward of the vehicle width direction D2. The pair of battery side faces 41, 42 are respectively located on the outside in the vehicle width direction D2 of the pair of side rails 21. More specifically, the right battery side face 41 is located to the right side of the right side rail 21, and the left battery side 42 is located to the left side of the left side rail 21.

Since the battery side faces 41, 42 of the battery pack 4 are disposed outside in the vehicle width direction D2 of the side rails 21 as described above, the battery pack reserves the dimension of the vehicle width direction D2 larger than the distance between the web parts 21a of the side rails 21. This structure allows the battery pack 4 to have an increased capacity. The battery pack 4 is preferably disposed over a wide range between the front wheel axle and the rear wheel axle in order to ensure the cruising range of the electric truck 3. In an electric truck 3 having a relatively small size (relatively short wheelbase), a single battery pack 4 may be disposed over almost the entire wheelbase. In this case, the front wheels are located close to the front of the battery pack 4, and the rear wheels are located close to the rear of the battery pack 4.

The size of the electric truck 3 and the number of the battery packs 4 are not limited to those of the embodiment. In an electric truck 3 having a relatively large size (relatively long wheelbase), multiple battery packs 4 may be provided side by side in the vehicle length direction D1. Also in this case, by arranging multiple battery packs 4 over a wide range of the wheel base, the capacity of the overall entire battery packs 4 is increased, and thereby the cruising range can be ensured.

The supporting device 1 couples the battery pack 4 to the side rails 21 and supports the battery pack 4. In other words, the battery pack 4 is supported by the side rails 21 via the supporting device 1. The present embodiment illustrates a support apparatus formed to be symmetric (symmetric about a plane) about a vertical plane passing through the center of the vehicle width direction D2 and extending in the vehicle length direction D1.

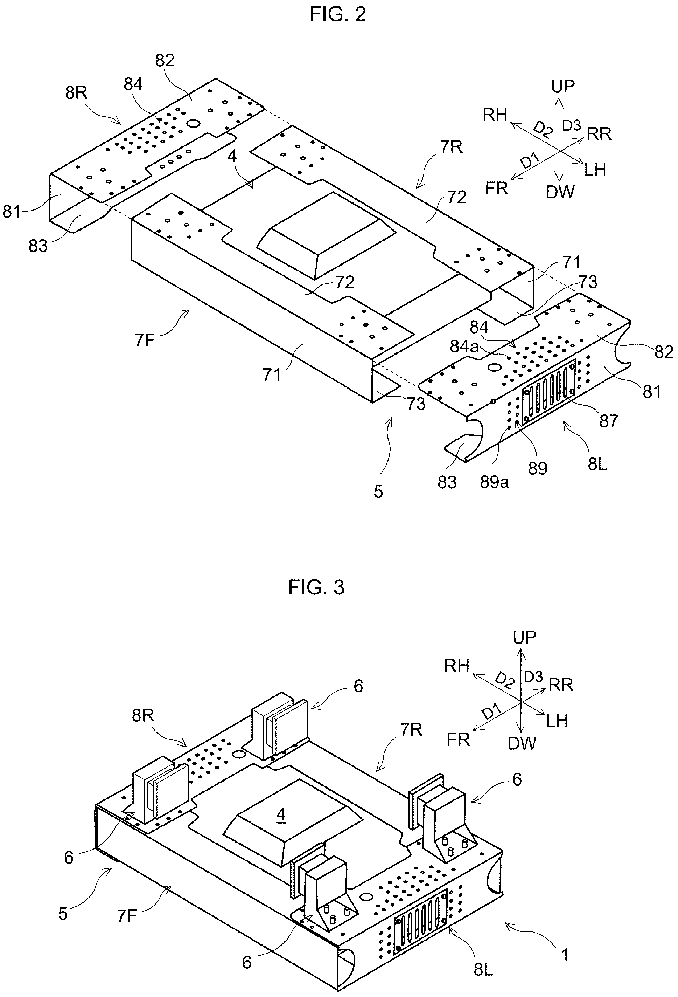

As shown in FIG. 3 side bracket 5 that accommodates the battery pack 4 and frame-side brackets (coupler bracket) 6 that couples the battery-side bracket 5 and the side rails 21 (see FIGS. 3 and 4). The battery-side bracket 5 is an outer wall body disposed on the outer circumference of the battery pack 4, and has a function of protecting the battery pack 4 from collision load. On the other hand, the frame-side brackets 6 extend outward in the vehicle width direction D2 and downward from the side rails 21, and have a function of suspending the battery pack 4 accommodated in the battery-side bracket 5 from the side rails 21.

The battery-side bracket 5 of the present embodiment has a main bracket (front bracket) 7F disposed so as to cover the front edge part of the battery pack 4, a main bracket (rear bracket) 7R disposed so as to cover the rear edge part of the battery pack 4, an end cross member (right bracket) 8R covering the right edge part 40RH of the battery pack 4, and an end cross member (left bracket) 8L covering the left edge part 40LH of the battery pack 4.

The pair of main brackets 7R, 7L have the same shapes as each other, and when they are not distinguished from each other, they are simply referred to the main bracket 7 or a bracket 7. The pair of end cross members 8R,8L have the same shapes as each other, and when they are not distinguished from each other, they are simply referred to as an end cross member 8, a side edge part bracket 8, or a bracket 8.

A pair of main brackets 7F, 7R are formed symmetrically to each other with respect to a vertical plane passing through the center of the vehicle width direction D2 and extending in the vehicle length direction D1 as a plane of symmetry. The main brackets 7F, 7R are also formed symmetrically to each other with respect to a plane.

The pair of end cross members 8r, 8L are also formed in longitudinal symmetric to each other with respect to a vertical plane passing through the center of the vehicle length direction D1 and extending in the vehicle width direction D2 as a plane of symmetry. The end cross members 8R, 8L are also formed symmetrically to each other with respect to a plane.

Each of the main brackets 7F, 7R and the end cross members 8R, 8L of the present embodiment is formed of a steel plate, and is formed into a channel-shape. The battery-side bracket 5 is arranged, with these main brackets 7F, 7R and the end cross members 8F, 8R, so as to surround the four sides of the battery pack 4.

Further, in the present embodiment, as the material of the main brackets 7F, 7R and the end cross members 8R,8L (i.e., battery-side bracket 5), high-tensile steel is used. High tensile strength steel sheet is, for example, a steel material defined to have a tensile strength of 490 MPa or more and less than 1000 MPa, and has advantages of capability of being thinned and having corrosion resistance. By using this, the battery-side bracket 5 and ultimately the supporting device 1 can be lightening while increasing the withstand load strength. Incidentally, the withstand load strength required for the supporting device 1 is strength not damaging the case of the battery pack 4 even if the supporting device 1 is subjected to certain collision load when the vehicle collides a collision (a side collision, a front collision, or a rear collision).

However, the material of the battery-side bracket 5 is not limited to this, and other steel materials or materials except for steel materials may be used. Since further lightening can be achieved if using ultra-high tensile strength steel is defined to have a tensile strength of 1000 MPa or more as steel material having higher tensile strength, but at present, ultra-high tensile strength steel, as compared with the high-tensile strength steel, is difficult to be processed and leads to cost increase, the present embodiment uses high-tensile steel.

Note that definition of high-tensile steel and ultra-high-tensile steel may be different with manufactures, for example. Therefore, the above 490 MPa and 1000 Mpa are exemplarily described as reference values.

Each of the main brackets 7F, 7R and the end cross members 8R, 8L is channel-shaped, the main brackets 7 each have a web part 71, an upper flange part 72, and a lower flange part 73, and the end cross members 8 each have a web part 81, a upper flange part (upper face part) 82, and a lower flange part (lower face part) 83.

The main brackets 7F are arranged so as to cover the front edge part 40FR of the battery pack 4. That is, the main bracket 7F is arranged in such a posture that the web part 71 is disposed along the front face 43 of the battery pack 4, the upper flange part 72 is disposed along the front side portion of the upper face 45 of the battery pack 4, and the lower flange part 73 is disposed along the front side portion of the lower face 46 of the battery pack 4.

The main bracket 7R is positioned so as to cover the rear edge part 40RR of the battery pack 4. That is, the main bracket 7R is arranged in such a posture that the web part 71 is disposed along the rear face 44 of the battery pack 4, the upper flange part 72 is disposed along the rear side portion of the upper face 45 of the battery pack 4, and the lower flange part 73 is disposed along the rear side portion of the lower face 46 of the battery pack 4.

The right end-cross member 8R is arranged so as to cover the right edge part 40RH of the battery pack 4. That is, the end cross member 8R is arranged in such a posture that the web part 81 is disposed along the right side surface 41 of the battery pack 4, the upper flange part 82 is disposed along the right side portion of the upper face45 of the battery pack 4, the lower flange part 83 is disposed along the right side portion of the lower face 46 of the battery pack 4.

The left end cross member 8L is positioned so as to cover the left edge part 40LH of the battery pack 4. That is, the end cross member 8L is arranged in such a posture that the web part 81 is disposed along the left side face 42 of the battery pack 4, the upper flange part 82 is along the left side portion of the upper face 45 of battery pack 4, and the lower flange part 83 is disposed along the left side portion of the lower face 46 of the battery pack 4.

Further, as shown in FIG. 2, under a state where the main brackets 7 are disposed in advance in the front edge part 40FR and the rear edge part 40RR of the battery pack 4, the end cross members 8 are disposed in the right edge part 40RH and the left edge part 40LH of the battery pack 4, so that the main brackets 7 and the end cross member 8 are coupled to the battery pack 4. Accordingly, the flange parts 72 and 73 of each main bracket 7 are disposed on the battery pack 4 (inside the vehicle height direction D3) closer than the flange parts 82 and 83 of the end cross members 8.

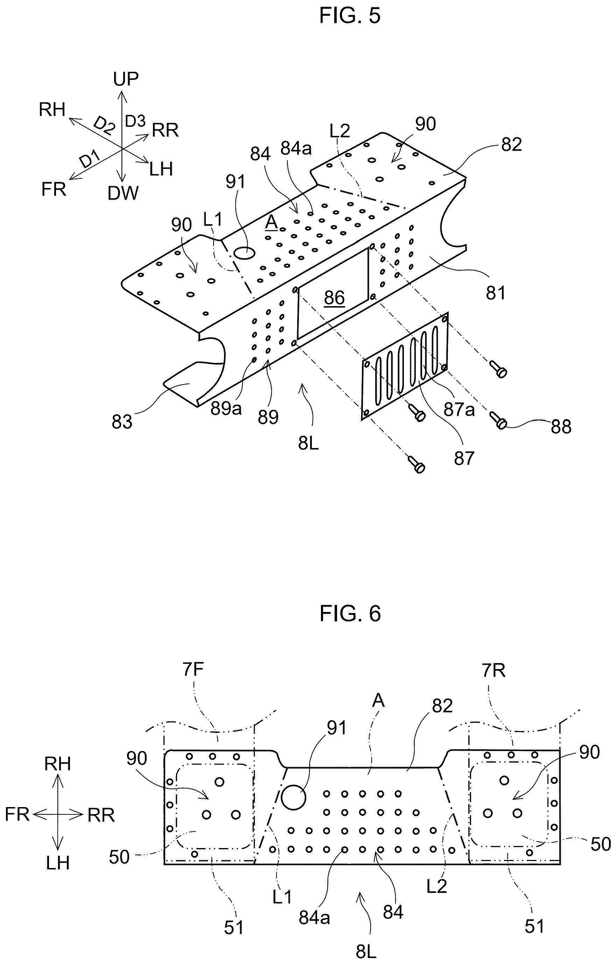

With this configuration, the both ends of the flange parts 72 and 73 of each main bracket 7 overlap the both ends of the flange parts 82 and 83 of the corresponding end cross members 8. In this overlapping parts (overlapping parts) 51 (see FIG. 6), the main brackets 7 and the end cross members 8 are coupled to each other. In the present embodiment, the main brackets 7 and the end cross member brackets 8 are coupled by using fasteners such as non-illustrated bolts and multiple fastening holes 90 shown in FIG. 1. Here, three fastening holes 90 arranged in a triangular shape serve as a set, but the number of holes is not limited to this. Also, the coupling means is not limited to this, and may be coupled by using any fixing device or any bonding means (e.g., welding or gluing).

Further, the end cross member 8 is arranged such that the web part 81 is spaced apart from with respect to the side faces 41 and 42 of the battery pack 4, and consequently the deformation allowance (absorb allowance of the collision load) in the event of a collision is reserved. Although this deformation allowance is reserved according to the deformation amount to be assumed, if the deformation allowance is not required, each end cross member 8 can be arranged such that the web part 81 of end cross member 8 are in contact with the side faces 41, 42 of the battery pack 4.

As shown in FIG. 3, the frame-side brackets 6 are fixed at the lower portions thereof to the upper portion of the overlapping part 51 in which the upper flanges 72 and 82 of the main bracket 7 and the end cross member 8 overlap and are coupled to each other. Further, each frame-side bracket 6 is, as shown in FIG. 4 fixed to the web part 21a of side rail 21. Therefore, the frame-side brackets 6 are provided two for each of the left and right of the electric track 3 (outside the vehicle width direction D2 of the respective side rails 21) (four in total). The portion where the upper flange part 72 of the main bracket 7, the upper flange part 82 of the end cross member 8, and the lower part of the frame-side bracket 6 are coupled is referred to as a coupling part 50 (see FIG. 6). Incidentally, the coupling part 50 is an contact face of the lower portion of the frame-side bracket 6 with the upper flange part 82 of the end cross member 8, is the entire lower face of the frame-side bracket 6 or the main part of the lower face of the frame-side bracket 6, and is a region located inside of the overlapping part 51.

### [1-2. Structure to lighten the bracket]

As shown in FIG. 1, in the main bracket 7 and the end cross member 8, the upper flange parts 72, 82 are set to have larger protrusion amounts P from the web parts 71, 81 than the lower flange parts 73, 83. This is because the upper flange parts 72, 82 require larger withstand load strengths than those that the lower flange parts 73, 83 require.

That is, when a side collision that the vehicle 3 receives a collision from the vehicle side, collision load is applied to the end cross member 8 on the side receiving the collision on the end edge on the outer side of the vehicle. Most of this applied collision load is inputted into the frame-side bracket 6 from the overlapping parts 51 (in particular, the coupling parts 50 thereof) at the both ends of the end cross member 8, further inputted from the frame-side bracket 6 to the side rail 21, and then received at the side rail 21. The remainder of the collision load applied to the end cross member 8 is inputted from the overlapping part 51 (coupling part 50) via the main bracket 7 to the overlapping part 51 (coupling part 50) on the other side. Accordingly, the upper flange parts 72, 82 on the paths through which most of the collision load is transmitted require larger withstand load strength than those that the lower flange parts 73, 83 require.

In addition, when front collision that the vehicle 3 undergoes a collision from the front face of the vehicle, collision load may be indirectly applied to the vehicle-front side of the main bracket 7F. Most of this applied collision load is inputted into the frame-side brackets 6 from the overlapping parts 51 (the coupling parts 50 thereof) at the both ends of the main bracket 7F, further inputted from the frame-side brackets 6 to the side rails 21, and then received at the side rails 21. The remainder of the collision load applied to the main bracket 7F is inputted from the overlapping part 51 (coupling part 50) via the end cross member to the overlapping part 51 (coupling part 50) on the other side. Accordingly, the upper flange parts 72, 82 on the paths through which most of the collision load is transmitted require larger withstand load strength than those that the lower flange parts 73, 83 require.

Similarly, when a rear collision that the vehicle 3 undergoes a collision from the rear face of the vehicle, collision load may be indirectly applied to the vehicle-rear side of the main bracket 7R on the rear side. Most of this applied collision load is inputted into the frame-side brackets 6 from the overlapping parts 51 (the coupling parts 50 thereof) at the both ends of the main bracket 7R, further inputted from the frame-side brackets 6 to the side rails 21, and then received at the side rails 21. The remainder of the collision load applied to the main bracket 7R is inputted from overlapping part 51 (coupling part 50) via the end cross member 8 to the overlapping part 51 (coupling part 50) on the other side. Accordingly, the upper flange parts 72, 82 on the paths through which most of the collision load is transmitted require larger withstand load strength than those that the lower flange parts 73, 83 require.

Furthermore, a side collision is generally assuming a case where a passenger car collides, and therefore, in the supporting device 1 of the present embodiment, the height at which the passenger car collides is the height at which the upper flange parts 72 and 82 are located. Therefore, also from this point, the upper flange parts 72, 82 require larger withstand load strength than those that the lower flange parts 73, 83 require.

Further, as shown in FIG. 1, the upper flange part 72 of the main bracket and the upper flange part 82 of the end cross member 8 have slightly smaller protrusion amounts P at the respective intermediate regions (i.e., between the both ends) than those at the both ends (coupling parts 51). As described above, since the paths through which most of the collision load are transmitted in the main bracket 7 and the end cross member 8 include the coupling parts 50 (i.e., the both ends of the main bracket 7 and the end cross member 8) at which the overlapping part 51 of the main bracket 7 and the end cross member 8 is coupled to the frame-side bracket 6 but the intermediate regions are not on the transmission path of the collision load, the intermediate regions do not require the withstand load strength as much as those that the both ends require.

Thus, by setting the protruding amount P of each flange part 72, 82, 73, 83 is set to be small for the intermediate regions and large for the both ends, the main brackets 7 and the end cross members 8 can achieve ensuring the withstand load strength and weight reduction.

Then, in the present supporting device 1, as shown in FIGS. 5 and 6, lightening holes 84 are formed in a particular region A of the flange part (upper surface portion) 82 of the end cross member 8.

The particular region A is a region sandwiched between overlapping parts 51, 51 located at both ends in the upper flange part 82, and also is a region sandwiched between the two frame-side brackets 6, 6 disposed in front and rear of the region along the either side rail 21, and a region between boundary lines L1, L2 which is partitioned by the boundary lines L1, L2 shown by a one-dot dash lines in FIGS. 5 and 6.

The boundary lines L1, L2 are inclined with respect to the vehicle width direction so as to gradually come close to each other as approaching the battery pack (driving battery) 4 the direction of the battery pack (that is, the direction of the side rail 21), and the particular region A is a region in the form of a trapezoid (in the present embodiment, an isosceles trapezoidal shape when seen from the front) and the upper base of which faces the battery pack 4 (that is, the direction of the side rail 21). This trapezoidal-shaped particular region A is a region where the withstand load strength of the end cross member 8 and, in turn, the withstand load strength of battery-side bracket 5 is less required. Consequently, even if the lightweight holes are formed in the particular region A, the withstand load strength can be ensured.

As described above, when a side collision occurs, most of the collision load applied to the end cross member 8 on the collision side is input into the side rail 21 from the frame side brackets 6 via overlapping parts 51 (coupling parts 50) on both ends of the end cross member 8, and the remainder of the collision load is input into the overlapping parts 51 (coupling parts 50) on the other side from the overlapping parts 51 (coupling parts 50) via the main brackets 7. In addition, when a front collision occurs, the most of the collision load applied to the front main bracket 7F is input into the side rail 21 from the frame-side bracket 6 via the overlapping parts 51 (coupling parts 50) on both ends of the main bracket 7F, and the remainder of the collision load is input into the overlapping parts 51 (coupling parts 50) on the other side from overlapping parts 51 (coupling parts 50) via the end cross members 8. Similarly, when a rear collision occurs, the most of the collision load applied to the rear main bracket 7R is input into the side rails 21 from the frame-side brackets 6 via the overlapping parts 51 (coupling part 50) on both ends of the main bracket 7R. The remainder of the collision load is input into the overlapping part 51 (coupling part 50) on the other side from overlapping part 51 (coupling part 50) via the end cross member 8.

When such a side collision, a front collision, and a rear collision are totally considered, the portions where both end portions of the end cross member 8 and the end parts of the main bracket 7 are coupled to overlap require large withstand load strength. In addition, in the event of a front collision or a rear collision, part of the collision load is inputted from overlapping part 51 (coupling part 50) on the collision side to the overlapping part 51 (coupling part 50) on the opposite side via the end cross members 8, so that certain withstand load strength is also required in the part between the front and rear overlapping parts 51 (coupling parts 50) of the end cross member 8. Further, when focusing on the upper flange part 82 of each end cross member 8, the upper flange 82 easily ensure the withstand load strength as closer to the proximal side thereof because the rigidity and the strength are increased by the web part 81 but has difficulty in ensuring the with stand load strengths as closer to the distal end (the side further from the web part 81) of the upper flange part 82.

From this point of view, portions between the both end of the upper flange part 82 (between two overlapping parts 51 or between two coupling parts 50), in particular portions in vicinity of the overlapping parts 51 (the coupling parts) have a higher demand for withstand load strength as approaching the distal end of the upper flange 82. A portion that has a relatively low demand for withstand load strength is, as shown in FIG. 6, the particular region A having a trapezoidal shape when viewed from the front in which shape the boundary lines L1, L2 are the trapezoidal legs; the edge of the upper flange part 82 of the inner side (i.e., on the side of the battery pack 4 side and also on the side of the side rail 21 side) in the vehicle-width direction from the intersections with the boundary lines L1 and L2 is the upper base; and the edge of the upper flange part 82 of the outer side in the vehicle-width direction from the intersections with the boundary lines L1 and L2 is the lower base.

Therefore, in the upper flange part 82 of the end cross member 8, weight reduction is achieved by forming lightening holes in the particular region A, which has a relatively low demand for the withstand load strength.
In the present embodiment, the ends (also, the ends of the lower base of the trapezoid) of the outer side in the vehicle-width direction of the boundary lines L1 and L2 are positions coinciding the boundary portions in the vehicle-width direction of the overlapping parts 51 where the flange parts 72 and 82 overlap or positions substantially coinciding the boundary portion.

Further, in the present embodiment, the ends (also, the ends of the upper base of the trapezoid) of the inner side in the vehicle-width direction (i.e., on the side of the battery pack 4 side and also on the side of the side rail 21 side) of the boundary lines L1 and L2 are positions coinciding points where the protrusion P of the upper flange part 82 is changed to be small and matching, or positions substantially coinciding the points.

In the present embodiment, on the upper flange part 82, a communicating hole 91 that places the grounding cable of the battery pack 4 is formed, and is formed in the particular region A.

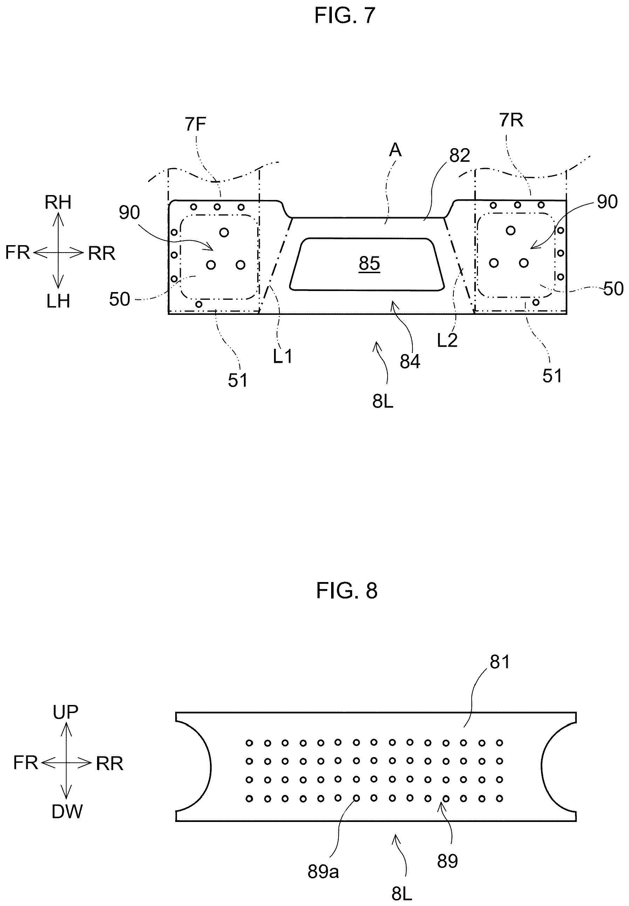

In the present embodiment, a large number of small circular holes 84a are formed as the lightening holes 84. In the present embodiment, the small holes 84a are formed to have the same arrangement and hole diameter as holes 21d for mounting vehicle component provided regularly arranged vertically and horizontally in web parts 21a of the side rails 21 so that various vehicle components such as on-board devices and tubes, harnesses to be mounted to the holes 84a. However, it is not essential to add the function of holes 21d for mounting vehicle components to the lightening holes 84, and it is sufficient to at least provide the lightening holes 84 that can reduce the weight of the end cross members 8 and that are provided to the particular region A. The size, the arrangement, and the number of the lightening holes 84 are not limited. For example, like a lightening hole 85 shown in FIG. 7, a large hole the almost same as the particular region A in a trapezoidal shape may be applied in the particular region A.

In the present embodiment, as shown in FIG. 5, an opening 86 for operation is formed on the web part 81 of the end cross member 8. With this configuration, the battery pack 4 can be accessed through the opening 86, so that the battery pack 4 can be checked or cleaned. The opening 86 is arranged in the intermediate region in the longitudinal direction of the web part 81. As described above, both end portions of the end cross member 8 have relatively high demands for withstand load strength, but the intermediate region thereof has a relatively small demand for withstand load strength. Considering the above, the opening 86 is disposed in the intermediate region.

The opening 86 is mounted with a cover 87 so that flying objects such as flying stones do not enter during running. Here, the cover 87 is removably mounted through bolts 88. The cover 87 is formed with multiple slit-shaped lightening holes 87a narrowed to an extent that flying objects are difficult to enter.

Further, in the intermediate region of the web part 81, multiple lightening holes 89 are formed in addition to the opening 86. These lightening holes 89 are also small circular holes 89a having the same hole diameters as the holes 21d for mounting vehicle components formed on the webs 21a of the side rails 21 and are made to be allowed to mount vehicle components by being arranged the same as the holes for mounting vehicle components.

Alternatively, when the opening 86 is not formed, the lightening holes 89 may be formed in the substantially entire region of the intermediate region of the web part 81, as shown in FIG. 8. Also in this alternative, the lightening hole may be formed on multiple small holes 89a functioning as the holes for mounting vehicle components.

### [2. Actions and Effects]

The supporting device 1 for the driving battery according to the present embodiment, which is configured as described above, can obtain the following functions and effects.
(1) Since, in the upper flange part 82 of the end cross member 8, the lightening holes 84 are formed in the trapezoidal-shaped particular region A, which does not require large withstand load strength, it is possible to reduce the weight of the end cross member, ultimately the weight of the supporting device 1, ensuring the withstand load strength.
(2) Since both ends of the lower base of the trapezoidal shape of the particular region A correspond to the boundary part on the outer side of the vehicle width direction of the overlapping part 51 where the end cross members 8 and the main brackets 7 overlap at their intersections thereof, the weight of the supporting device 1 can be reduced while the withstand load strength required for overlapping part 51 is ensured.
(3)Since the supporting device 1 that supports the battery pack 4 is coupled to the side rails 21 and impact when the vehicle 3 collides (side collision, front collision, or rear collision) is received by the side rails 21, it is possible to suppress damage to the battery pack 4.
(4) Since the lightening holes 84 are formed as multiple holes 84a for mounting vehicle components available for mounting vehicle components, it is possible to easily mount vehicle components (e.g., small components) and fix wiring on the supporting device 1, such as attaching an on-board component 92 to the upper flange part 82 of the end cross member 8, as shown in FIG. 4, for example.
(5) Since the opening 86 for operation is formed in the intermediate region in the longitudinal direction of the web part 81 of the end cross member 8, the battery pack 4 can be accessed through the opening 86 so that the battery pack 4 can be checked and cleaned. Since the intermediate region in the longitudinal direction of the web part 81 is a region not requiring large withstand load strength, the opening 86 can be formed on the intermediate region, ensuring the withstand load strength.
   The opening 86 is mounted with the cover 87, which makes it possible to prevent flying object such as flying stones to enter, so that the battery pack 4 inside thereof can be protected.
   Since the cover 87 is formed with multiple slit-shaped lightening holes 87a narrowed to an extent that flying objects are difficult to enter, the end cross member 8 and, ultimately, the supporting device 1 can be lightened while the battery pack 4 is being protected.
(6) Since multiple lightening holes 86, which also function as holes for mounting vehicle components available for mounting vehicle components, are formed in the intermediate region in the longitudinal direction of the web part 81 of the end cross member 8, it is possible to easily mount vehicle components (e.g., small components) and fix wiring on the supporting device 1, such as attaching the on-board components 93,94 to the web part 81 of the end cross member 8, as shown in FIG. 4, for example. Incidentally, the lightening holes 84, 89 also function as drain holes.

### [3. Miscellaneous]

The configuration of the above embodiment is exemplary, and can be appropriately changed and implemented without departing from the scope of the present invention.

For example, in the above embodiment, an example has been described in which the supporting device for a driving battery is applied to a truck, but the supporting device for a driving battery of the present embodiment may be applied to a vehicle except for a truck.

Further, in the above embodiment, the supporting device for a driving battery is coupled to the side rails 21 and is supported on the side rails 21, the supporting device may be supported by being coupled to the structural elements of the vehicle except for the side rails 21.

In the above embodiment, the driving battery 4 and the supporting device 1 for a driving battery are disposed to the outside in the vehicle width direction of the side rails 21, but alternatively the driving battery 4 and the supporting device 1 for a driving battery of the present embodiment may be settled between the left and right side rails 21. If the driving battery and the supporting device for the driving battery protrude under the side rails 21, the present invention has effects to suppress the impact on the driving battery, when a passenger car or the like that has undergone a side collision impact the supporting device of the driving battery from the lower side of the side rails 21.

Furthermore, the shapes and the sizes of the lightening holes 84a, 85, and 89a are not limited.

Further, in the above embodiment, the lightening holes 89 are formed in the particular region A of the upper flange part 82 of the end cross member 8, and further, lightening holes 89 may be additionally formed in a region corresponding to the particular region A on the lower flange part 83 of the end cross member 8 if needed.

Alternatively, if the lower flange part 83 is disposed on a path through which the most of collision load is transmitted, the lightening holes 89 may be formed in a region corresponding to the particular region A of the lower flange part 83 in place of the upper flange part 82.

Further, each end cross member 8 is also formed in longitudinal symmetric to each other with respect to a vertical plane passing through the center of the vehicle length direction D1 and extending in the vehicle width direction D2, but is not limited to the shape of the longitudinal symmetry.

- 1: supporting device (supporting device for driving battery)
- 2: ladder frame
- 3: electric truck (electric vehicle, vehicle)
- 4: battery pack for driving (driving battery, battery pack)
- 5: battery-side bracket
- 6: frame-side bracket (coupler bracket)
- 7F,7: main bracket (front bracket)
- 7R,7: main bracket (rear bracket)
- 8R,8: end cross member (right bracket)
- 8L,8: end cross member (left bracket)
- 21: side rail
- 21a: web part of side rail 21
- 21b,21c: flange part of side rail 21
- 21d: hole for mounting vehicle component
- 22: cross member
- 40FR: front edge part of battery pack 4
- 40RR: rear edge part of battery pack 4
- 40RH: right edge part of battery pack 4
- 40LH: left edge part of battery pack 4
- 41: right side face of battery 4
- 42: left side face of battery 4
- 43: front face of battery pack 4
- 44: rear face of battery pack 4
- 45: upper face of battery pack 4
- 46: lower face of battery pack 4
- 50: coupling part
- 51: overlapping part
- 71: web part of main bracket 7
- 72: upper flange part of main bracket 7
- 73: lower flange part of main bracket 7
- 81: web part of end cross member 8
- 82: upper flange part (upper face part)
- 83: lower flange part (lower face part)
- 84: lightening hole
- 84a: small hole as lightening hole 84
- 85: lightening hole
- 86: opening
- 87: cover
- 87a: lightening hole
- 88: bot
- 89: lightening hole
- 89a: small hole as lightening hole 89
- 90: fastening hole
- 91: communicating hole
- 92,93,94: vehicle component
- A: particular part
- D1: vehicle length direction D1
- D2: vehicle width direction D2
- D3: vehicle height direction D3
- L1,L2: boundary line
- FR: front
- RR: rear
- LH: left hand
- RH: right hand
- UP: upside
- DW: downside
- P: protruding amount from web part 71, 81 of flange part 72,82,73,83

## Claims

1. A supporting device (1) for a driving battery (4) mounted on an electronic vehicle (3), the supporting device (1) comprising:
a battery-side bracket (5) comprising a front bracket (7F) that has a squared C-shaped cross section and covers a front edge part (40FR) of the driving battery (4), a rear bracket (7R) that has a squared C-shaped cross section and covers a rear edge part (40RR) of the driving battery (4), a right bracket (8R) that has a squared C-shaped cross section and covers a right edge part (40RH) of the driving battery (4), and a left bracket (8L) that has a squared C-shaped cross section and covers a left edge part (40LH) of the driving battery (4), the battery-side bracket (5) being attached to the driving battery (4); and
coupler brackets (6) that are coupled one to each of an intersection part of the front bracket (7F) and the right bracket (8R), an intersection part of the front bracket (7F) and the left bracket (8L), an intersection part of the rear bracket and the right bracket, an intersection part of the rear bracket (7R) and the left bracket (8L), and that couple the driving battery (4) to the electric vehicle (3) via the battery-side bracket (5),
**characterized in that** at least one of an upper face part (82) and a lower face part (83) of at least one of the right bracket (8R) and the left bracket (8L) that are serving as side edge part bracket (8) has a particular region being in a form of a trapezoid having an upper base facing in a direction of the driving battery (4) and being a region at an intermediate region in a longitudinal direction sandwiched by coupling parts (50) coupled with the coupler bracket (6), one or more lightening holes (84,84a,85) being formed within the particular region (A).

2. The supporting device (1) for the driving battery (4) according to claim 1, wherein
both ends of a lower base of the trapezoid in the particular region (A) correspond to boundary part outside in a vehicle (3) width direction of regions at which the brackets overlap in the intersection parts.

3. The supporting device for the driving battery (4) according to claim 1 or 2, wherein:
the electric vehicle (3) is a truck having a pair of left and right side rails (21); and
the driving battery (4) is coupled to the pair of side rails (21) via the coupler brackets (6).

4. The supporting device (1) for the driving battery (4) according to any one of claims 1-3, wherein: the one or more lightening holes ((84,84a) are formed to serve as a plurality of holes for mounting vehicle components, the plurality of holes being usable for installing a vehicle component.

5. The supporting device (1) for the driving battery (4) according to any one of claims 1-4, wherein:
at least one of the side edge part brackets (8) has a web part (81) having the intermediate region in the longitudinal direction on which part an opening (86) for operation is formed; and
a cover (87) is attached on the opening (86).

6. The supporting device (1) for the driving battery (4) according to any one of claims 1-5, wherein:
at least one of the side edge part brackets (8) has a web part (81) having the intermediate region in the longitudinal direction on which part a plurality of lightening holes (89,89a) that function as a plurality of holes for mounting vehicle components are formed, the plurality of holes (89,89a) being usable for installing a vehicle component.

## Patentansprüche

1. Stützvorrichtung (1) für eine Antriebsbatterie (4), die an einem elektronischen Fahrzeug (3) montiert ist, wobei die Stützvorrichtung (1) umfasst:
einen Batterieseitenhalter (5) mit einem vorderen Halter (7F), der einen quadratischen C-förmigen Querschnitt aufweist und einen Vorderkantenteil (40FR) der Antriebsbatterie (4) bedeckt, einem hinteren Halter (7R), der einen quadratischen C-förmigen Querschnitt aufweist und einen Hinterkantenteil (40RR) der Antriebsbatterie (4) bedeckt, einem rechten Halter (8R), der einen quadratischen C-förmigen Querschnitt aufweist und einen rechten Kantenteil (40RH) der Antriebsbatterie (4) bedeckt, und einem linken Halter (8L), der einen quadratischen C-förmigen Querschnitt aufweist und einen linken Kantenteil (40LH) der Antriebsbatterie (4) bedeckt, wobei der Batterieseitenhalter (5) an der Antriebsbatterie (4) befestigt ist; und
Kopplerhalter (6), die jeweils mit jedem von einem Kreuzungsteil des vorderen Halters (7F) und des rechten Halters (8R), einem Kreuzungsteil des vorderen Halters (7F) und des linken Halters (8L), einem Kreuzungsteil des hinteren Halters und des rechten Halters, einem Kreuzungsteil des hinteren Halters (7R) und des linken Halters (8L) gekoppelt sind und die die Antriebsbatterie (4) mit dem Elektrofahrzeug (3) über den Batterieseitenhalter (5) koppeln,
**dadurch gekennzeichnet, dass** mindestens einer von einem oberen Flächenteil (82) und einem unteren Flächenteil (83) von mindestens einem des rechten Halters (8R) und des linken Halters (8L), die als Seitenkantenteilhalter (8) dienen, einen speziellen Bereich aufweist, der in Form eines Trapezes mit einer oberen Basis vorliegt, die in einer Richtung der Antriebsbatterie (4) gewandt ist, und ein Bereich an einem Zwischenbereich in einer Längsrichtung ist, der durch Kopplungsteile (50) eingefügt ist, die mit dem Kopplerhalter (6) gekoppelt sind, wobei ein oder mehrere Gewichtreduktionslöcher (84,84a,85) innerhalb des speziellen Bereichs (A) ausgebildet sind.

2. Stützvorrichtung (1) für die Antriebsbatterie (4) nach Anspruch 1, wobei
beide Enden einer unteren Basis des Trapezes in dem speziellen Bereich (A) einem Grenzteil in einer Breitenrichtung des Fahrzeugs (3) auswärts von Bereichen, an denen die Halter in den Kreuzungsteilen überlappen, entsprechen.

3. Stützvorrichtung für die Antriebsbatterie (4) nach Anspruch 1 oder 2, wobei:
das Elektrofahrzeug (3) ein Lastwagen mit einem Paar von linken und rechten Seitenschienen (21) ist; und
die Antriebsbatterie (4) mit dem Paar von Seitenschienen (21) über die Kopplerhalter (6) gekoppelt ist.

4. Stützvorrichtung (1) für die Antriebsbatterie (4) nach einem der Ansprüche 1-3, wobei: das eine oder die mehreren Gewichtsreduktionslöcher (84,84a) so ausgebildet sind, dass sie als Vielzahl von Löchern zum Montieren von Fahrzeugkomponenten dienen, wobei die Vielzahl von Löchern zum Installieren einer Fahrzeugkomponente verwendbar ist.

5. Stützvorrichtung (1) für die Antriebsbatterie (4) nach einem der Ansprüche 1-4, wobei:
mindestens einer der Seitenkantenteilhalter (8) einen Stegteil (81) mit dem Zwischenbereich in der Längsrichtung aufweist, an welchem Teil eine Öffnung (86) zur Betätigung ausgebildet ist; und
eine Abdeckung (87) an der Öffnung (86) befestigt ist.

6. Stützvorrichtung (1) für die Antriebsbatterie (4) nach einem der Ansprüche 1-5, wobei:
mindestens einer der Seitenkantenteilhalter (8) einen Stegteil (81) mit dem Zwischenbereich in der Längsrichtung aufweist, an welchem Teil eine Vielzahl von Gewichtsreduktionslöchern (89,89a), die als Vielzahl von Löchern zum Montieren von Fahrzeugkomponenten fungieren, ausgebildet ist, wobei die Vielzahl von Löchern (89,89a) zum Installieren einer Fahrzeugkomponente verwendbar ist.

## Revendications

1. Dispositif de support (1) pour une batterie d'entraînement (4) montée sur un véhicule électronique (3), le dispositif de support (1) comportant :
un support côté batterie (5) comportant un support avant (7F) qui présente une section transversale carrée en forme de C et recouvre une partie de bord avant (40FR) de la batterie d'entraînement (4), un support arrière (7R) qui présente une section transversale carrée en forme de C et recouvre une partie de bord arrière (40RR) de la batterie d'entraînement (4), un support droit (8R) qui présente une section transversale carrée en forme de C et recouvre une partie de bord droit (40RH) de la batterie d'entraînement (4), et un support gauche (8L) qui présente une section transversale carrée en forme de C et recouvre une partie de bord gauche (40LH) de la batterie d'entraînement (4), le support côté batterie (5) étant fixé à la batterie d'entraînement (4) ; et
des supports de couplage (6) qui sont couplés à chaque partie parmi une partie d'intersection du support avant (7F) et du support droit (8R), une partie d'intersection du support avant (7F) et du support gauche (8L), une partie d'intersection du support arrière et du support droit, une partie d'intersection du support arrière (7R) et du support gauche (8L), et qui couplent la batterie d'entraînement (4) au véhicule électrique (3) via le support côté batterie (5),
**caractérisé en ce qu'**au moins une partie parmi une partie de face supérieure (82) et une partie de face inférieure (83) d'au moins un support parmi le support droit (8R) et le support gauche (8L) qui servent de support de partie de bord latéral (8) a une zone particulière qui a une forme de trapèze ayant une base supérieure dirigée dans une direction de la batterie d'entraînement (4) et qui est une zone située au niveau d'une zone intermédiaire dans une direction longitudinale enserrée par des parties de couplage (50) couplées au support de couplage (6), un ou plusieurs trous d'allégement (84, 84a, 85) étant formés à l'intérieur de la zone particulière (A).

2. Dispositif de support (1) pour la batterie d'entraînement (4) selon la revendication 1, dans lequel
les deux extrémités d'une base inférieure du trapèze dans la zone particulière (A) correspondent à une partie de frontière à l'extérieur dans une direction de largeur du véhicule (3) de zones au niveau desquelles les supports se chevauchent dans les parties d'intersection.

3. Dispositif de support pour la batterie d'entraînement (4) selon la revendication 1 ou 2, dans lequel :
le véhicule électrique (3) est un camion ayant une paire de longerons gauche et droit (21) ; et
la batterie d'entraînement (4) est couplée à la paire de longerons (21) via les supports de couplage (6).

4. Dispositif de support (1) pour la batterie d'entraînement (4) selon l'une quelconque des revendications 1 à 3, dans lequel : le ou les trous d'allégement (84, 84a) sont formés pour servir de pluralité de trous pour le montage de composants de véhicule, la pluralité de trous pouvant être utilisée pour installer un composant de véhicule.

5. Dispositif de support (1) pour la batterie d'entraînement (4) selon l'une quelconque des revendications 1 à 4, dans lequel :
au moins un des supports de partie de bord latéral (8) a une partie d'âme (81) ayant la zone intermédiaire dans la direction longitudinale, partie sur laquelle est formée une ouverture (86) pour le fonctionnement ; et
un couvercle (87) est fixé sur l'ouverture (86).

6. Dispositif de support (1) pour la batterie d'entraînement (4) selon l'une quelconque des revendications 1 à 5, dans lequel :
au moins un des supports de partie de bord latéral (8) a une partie d'âme (81) ayant la zone intermédiaire dans la direction longitudinale, partie sur laquelle est formée une pluralité de trous d'éclairage (89, 89a) qui fonctionnent comme une pluralité de trous pour le montage de composants de véhicule, la pluralité de trous (89 , 89a) pouvant être utilisée pour installer un composant de véhicule.
